# EUROPEAN PATENT SPECIFICATION

(11) **EP 1 902 835 B1**
(45) Date of publication and mention of the grant of the patent: **13.03.2013**
(21) Application number: 06020000.3
(22) Date of filing: 25.09.2006
(51) Int. Cl.: B32B 7/04, B32B 27/08, C09D 11/10

(54) **Multilayer decorative film**
Mehrschichtige dekorative Folie
Film décoratif multicouche

(43) Date of publication of application: 26.03.2008
(73) Proprietor: Deceuninck NV, 8830 Hooglede-Gits (BE)
(72) Inventor: Grymonprez, Wim Maurits Ivo, 8800 Roeselare (BE)
(74) Representative: Moens, Marnix Karel Christiane

(56) References cited:
- EP-A2- 0 343 491
- WO-A-03/106143

## Description

The invention relates to a method for the producing a multilayer decorative film by printing an ink on a first surface of a thermoplastic base film after which a protective thermoplastic film is welded to the first surface of the base film. Multilayer decorative films made according to the method of the invention are typically used to cover window profiles, doors, siding panels or other building profiles for decorative purposed, but also to protect the surface of these object against the influence of weather and light. Films for outdoor applications often consists of a polyvinylchloride (PVC) based film, covered with a protective acrylate film.

EP-A-0343491 described a process in which a thermoplastic base film, e.g. a PVC film, is printed with an ink to produce a decorative pattern. The ink in this process is a lacquer that comprises a film forming agent (Degalan LP) dissolved in a mixture of acetone, butanon and ethylglycol acetate. After printing a polyacrylate film is welded to the base film to protect the decorative pattern and the PVC film against the influence of weather and light.

A disadvantage of the known method is that residual solvent that migrates to the interface between the base film and the protective can cause adhesion problems between the two films.

Aim of this invention is to provide a method for producing a multilayer surface film as described above, with an improved adhesion between the base film and the protective film.
This problem was solved by the present invention in that the ink comprises a monofunctional compound and is radiated after printing, such that a thermoplastic film forming agent is formed.

The application of an ink, based on a monofunctional compound that, after printing is polymerised by radiation to a thermoplastic film forming agent, results in a better adhesion between the base film and the protective film.

Monofunctional compounds suitable to be cured to a thermoplastic film forming agent include ethylenically unsaturated compounds, including monomers, dimers or oligomers having one ethylenically unsaturated group such as vinyl or allyl groups, and polymers having terminal or pendant ethylenic unsaturation. Examples of curable liquids suitable for present invention include, but are not limited to, acrylate and methacrylate monomers or polymers containing acrylic or methacrylic group(s) of the general structure 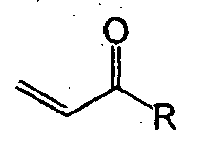 wherein R is OH, or OCH₃. The active group can be attached to an aliphatic or aromatic group with from 1 to about 20 carbon atoms and preferably from about 8 to about 12 carbon atoms, to an aliphatic or aromatic siloxane chain or ring with from 1 to about 20 dimethyl siloxane units, to a combination of the aforementioned groups, or to a polymer chain. Examples of such compounds include n-dodecyl acrylate, n-lauryl acrylate, methacryloxypropylpenta-methyldisiloxane, methylbis(trimethylsiloxy)silylpropylgyfcerolmethacrylate, or bis(methacryloxybutyl)tetramethyldisiloxane, 2-phenoxyethyl acrylate

Further examples of suitable curable materials include vinyl ether monomers, oligomers, or polymers containing vinyl ether groups of the general formula

CHR₁ =CR₂ -O-,

where R₁ and R₂ are hydrogen or alkyl groups with from 1 to about 10 carbon atoms, and preferably from 1 to 2 carbon atoms. Examples of such materials include decyl vinyl ether, dodecyl vinyl ether, hexadecyl vinyl ether, 4-chlorobutylvinyl ether.

To obtain a visual pattern the ink generally contains a colorant. Colorants suitable for the present invention may be a dye.

Examples, of suitable dyes include anthraquinones, monoazo dyes, disazo dyes, phthalocyanines, aza[18]annulenes, formazan copper complexes, triphenodioxazines, Bemacid Red 2BMN; Pontamine Brilliant Bond Blue A; Pontamine; Food Black 2; Carodirect Turquoise FBL Supra Conc. (Direct Blue 199), available from Carolina Color and Chemical; Special Fast Turquoise 8GL Liquid (Direct Blue 86), available from Mobay Chemical; Intrabond Liquid Turquoise GLL (Direct Blue 86), available from Crompton and Knowles; Cibracron Brilliant Red 38-A (Reactive Red 4), available from Aldrich Chemical; Drimarene Brilliant Red X-2B (Reactive Red 56), available from Pylam, Inc.; Levafix Brilliant Red E-4B, available from Mobay Chemical; Levafix Brilliant Red E-6BA, available from Mobay Chemical; Procion Red H8B (Reactive Red 31), available from ICI America; Pylam Certified D&C Red #28 (Acid Red 92), available from Pylam; Direct Brill Pink B Ground Crude, available from Crompton & Knowles; Cartasol Yellow GTF Presscake, available from Sandoz, Inc.; Tartrazine Extra Cone. (FD&C Yellow #5. Acid Yellow 23), available from Sandoz; Carodirect Yellow RL (Direct Yellow 86), available from Carolina Color and Chemical; Cartasol Yellow GTF Liquid Special 110, available from Sandoz, Inc.; D&C Yellow #10 (Acid Yellow 3), available from Tricon; Yellow Shade 16948, available from Tricon, Basacid Black X34, available from BASF, Carta Black 2GT, available from Sandoz, Inc.; Direct Brilliant Pink B (Crompton-Knolls); Aizen Spilon Red C-BH (Hodagaya Chemical Company); Kayanol Red 3BL (Nippon Kayaku Company); Levanol Brilliant Red 3BW (Mobay Chemical Company); Levaderm Lemon Yellow (Mobay Chemical Company); Spirit Fast Yellow 3G; Sirius Supra Yellow GD 167; Cartasol Brilliant Yellow 4GF (Sandoz); Pergasol Yellow CGP (Ciba-Geigy); Dermacarbon 2GT (Sandoz); Pyrazol Black BG (ICI); Morfast Black Conc A (Morton-Thiokol); Diazol Black RN Quad (ICI); Luxol Blue MBSN (Morton-Thiokol); Sevron Blue 5GMF (ICI); Basacid Blue 750 (BASF); Bemacid Red, available from Berncolors, Poughkeepsie, N.Y.; Pontamine Brilliant Bond Blue; Berncolor A. Y. 34; Telon Fast Yellow 4GL-175; BASF Basacid Black SE 0228; the Pro-Jet series of dyes available from lcl, including Pro-Jet Yellow I (Direct Yellow 86), Pro-Jet Magenta I (Acid Red 249), Pro-Jet Cyan I (Direct Blue 199), Pro-Jet Black I (Direct Black 168), Pro-Jet Yellow 1-G (Direct Yellow 132), Aminyl Brilliant Red F-B, available from Sumitomo Chemical Co. (Japan), the Duasyn line of "salt-free" dyes available from Hoechst, such as Duasyn Direct Black HEF-SF (Direct Black 168), Duasyn Black RL-SF (Reactive Black 31 ), Duasyn Direct Yellow 6G-SF VP216 (Direct Yellow 157), Duasyn Brilliant Yellow GL-SF VP220 (Reactive Yellow 37), Duasyn Acid Yellow XX-SF VP413 (Acid Yellow 23), Duasyn Brilliant Red F3B-SF VP218 (Reactive Red 180), Duasyn Rhodamine B-SF VP353 (Acid Red 52), Duasyn Direct Turquoise Blue FRL-SF VP368 (Direct Blue 199), Duasyn Acid Blue AESF VP344 (Acid Blue 9), and the like, as well as mixtures thereof. The dye is present in any effective amount, typically from about 1 to about 20 percent by weight, and preferably from about 2 to about 6 percent by weight, although the amount can be outside these ranges.

In addition, the optional colorant for the ink compositions of the present invention can be a pigment, or a mixture of one or more dyes and/or one or more pigments. The pigment can be black, cyan, magenta, yellow, red, blue, green, brown, mixtures thereof, and the like. Specific examples of suitable black pigments include various carbon blacks such as channel black, furnace black, lamp black, and the like. Colored pigments include red, green, blue, brown, magenta, cyan, and yellow particles, as well as mixtures thereof. lllustrative examples of magenta pigments include 2,9-dimethyl-substituted quinacridone and anthraquinone dye, identified in the Color Index as Cl 60710, Cl Dispersed Red 15, a diazo dye identified in the Color Index as Cl 26050, Cl Solvent Red 19, and the like. Illustrative examples of suitable cyan pigments include copper tetra-4-(octadecyl sulfonamido) phthalocyanine, X-copper phthatocyanine pigment, listed in the color index as CI 74160, Cl Pigment Blue, and Anthradanthrene Blue, identified in the Color Index as Cl 69810, Special Blue X-2137, and the like. lllustrative examples of yellow pigments that can be selected include diarylide yellow 3,3-dichlorobenzidene acetoacetanilides, a monoazo pigment identified in the Color Index as Cl 12700, Cl Solvent Yellow 16, a nitrophenyl amine sulfonamide identified in the Color Index as Foron Yellow SE/GLN, Cl Dispersed Yellow 33, 2,5-dimethoxy-4-sulfonanilide phenylazo-4'-chloro-2,5-dimethoxy acetoacetanilide, Permanent Yellow FGL, and the like. Additional examples of pigments include Normandy Magenta RD-2400 (Paul Uhlich), Paliogen Violet 5100 (BASF), Paliogen Violet 5890 (BASF), Permanent Violet VT2645 (Paul Uhlich), Heliogen Green L8730 (BASF), Argyle Green XP-111-S (Paul Uhlich), Brilliant Green Toner GR 0991 (Paul Uhlich), Heliogen Blue L6900, L7020 (BASF), Heliogen Blue D6840, D7080 (BASF), Sudan Blue OS (BASF), PV Fast Blue B2G01 (American Hoechst), lrgalite Blue BCA (Ciba-Geigy), Paliogen Blue 6470 (BASF), Sudan III (Matheson, Coleman, Bell), Sudan II(Matheson, Coleman, Bell), Sudan IV (Matheson, Coleman, Bell), Sudan Orange G (Aldrich), Sudan Orange 220 (BASF), Paliogen Orange 3040 (BASF), Ortho Orange OR 2673 (Paul Uhlich), Paliogen Yellow 152, 1560 (BASF), Lithol Fast Yellow 0991 K (BASF), Paliotol Yellow 1840 (BASF), Novoperm Yellow FG1 (Hoechst), Permanent Yellow YE 0305 (Paul Uhlich), Lumogen Yellow D0790 (BASF), Suco-Gelb L1250 (BASF), Suco-Yellow D1355 (BASF), Hostaperm Pink E (American Hoechst), Fanal Pink D4830 (BASF). Cinquasia Magenta (DuPont), Lithol Scarlet D3700 (BASF), Tolidine Red (Aldrich), Scarlet for Thermoplast NSD PS PA (Ugine Kuhlmann of Canada), E. D. Toluidine Red (Aldrich), Lithol Rubine Toner (Paul Uhlich), Lithol Scarlet 4440 (BASF), Bon Red C (Dominion Color Co.), Royal Brilliant Red RD-8192 (Paul Uhlich), Oracet Pink RF (Ciba-Geigy), Paliogen Red 3871 K (BASF), Paliogen Red 3340 (BASF), and Lithol Fast Scarlet L4300 (BASF). Additional suitable commercially available pigment dispersions include the Hostafines available from Hoechst, including Hostafine Black T, Hostafine Black TS. Hostafine Yellow HR, Hostafine Yellow GR, Hostafine Red FRLL, Hostafine Rubine F6B, and Hostafine Blue B2G, as well as dispersions available from BASF, including Disperse Black 00-6607, Luconyl Yellow 1250, Basoffex Pink 4810, Luconyt Blue 7050, and the like. Other pigments can also be selected. Preferably, the pigment particle size is as small as possible to enable a stable colloidal suspension of the particles in the liquid vehicle and to prevent clogging of the ink channels when the ink is used in a thermal ink jet printer. Preferred particle average diameters are generally from about 0.001 to about 5 microns, and more preferably from about 0.1 to about 1 microns, although the particle size can be outside these ranges. The pigment is present in the ink composition in any effective amount, typically from about 1 to about 20 percent by weight and preferably from about 4 to about 8 percent by weight, although the amount can be outside these ranges.

Other additives can also be present in the inks. For example, one or more surfactants or wetting agents can be added to the ink. These additives may be of the cationic, anionic, or nonionic types. Suitable surfactants and wetting agents include sodium lauryl sulfate, Tamol® SN. Tamoi® LG, those of the Triton® series available from Rohm and Haas Company, those of the Marasperse® series, those of the Igepal® series available from GAF Company, those of the Tergitol® series, and other commercially available surfactants. These surfactants and wetting agents are present in effective amounts, generally from 0 to about 15 percent by weight, and preferably from about 0.01 to about 8 percent by weight, although the amount can be outside of this range.

Polymeric additives can also be added to the inks to enhance the viscosity and the stability of the ink. Water soluble polymers such as Gum Arabic, polyacrylate salts, polymethacrylate salts, polyvinyl alcohols, hydroxy propylcellulose, hydroxyethyleellulose, polyvinylpyrrolidinone, polyvinylether, starch, polysaccharides, and the like are typical polymeric additives. Polymeric additives can be present in the ink of the present invention in amounts of from 0 to about 10 percent by weight, and preferably from about 0.01 to about 5 percent by weight, although the amount can be outside this range.

One example of an additive to the inks is a polymeric additive consisting of two polyalkylene oxide chains bound to a central bisphenol-A-type moiety. Generally, the molecular weight of the polyalkylene oxide polymer is from about 14,000 to about 22,000, and preferably from about 15,000 to about 20,000, although the molecular weight can be outside this range. These materials are commercially available; for example, Carbowax M20, a polyethylene oxidelbisphenol-A polymer of the above formula with a molecular weight of about 18,000, available from Union Carbide Corporation. Danbury, Conn., is a suitable polymeric additive for the inks of the present invention. In addition, compounds of the above formula can be prepared by the methods disclosed in Polyethers, N. G. Gaylord, John Wiley & Sons, New York (1963) and "Laboratory Synthesis of Polyethylene Glycol Derivatives," J. M. Harris, J. Molecular Science-Rev. Macromol. Chem. Phys., C25(3), 326-373 (1985), the disclosures of each of which are totally incorporated herein by reference. The polyalkylene oxide additive is generally present in the ink in an amount of at least about 1 part per million. Typically, the polyalkylene oxide additive is present in amounts of up to 1 percent by weight of the ink, and preferably in amounts of up to 0.5 percent by weight of the ink; larger amounts of the additive may increase the viscosity of the ink beyond the desired level, but larger amounts can be used in applications wherein increased ink viscosity is not a problem. lnks containing these additives are disclosed in U.S. Pat. No. 5,207,825.

Another advantage of the method of the invention is that the time between printing of the ink on the base film and the application of the second film is significantly reduced due to the fact that drying of an ink that is hardened by radiation is not necessary.

The ink can be applied to the base film by any suitable method. Examples of suitable printing methods are flexography and ink jet printing. Rotogravure printing is a preferred method to transfer ink to a base film for outdoor building applications.

To increase the cure rate of the ink a photoinitiator may be added to the ink. The photoinitiator can also promote sufficient through-curing of the ink. Suitable photoinitiators include UV photoinitiators and visible light photoinitiators or combinations thereof, a more detailed discussion of which is provided below.

A visible light photoinitiator can be used in addition to or as a substitute for UV photoinitiators. Preferably, a combination of UV and visible light photoinitiators, or a photoinitiator having a significant portion of its absorbance spectrum in the visible regions, is included in the ink to promote the complete curing of the coating. As used herein, visible light photoinitiators refer to both photoinitiators which have an absorbance spectrum in both the UV and visible light regions as well as photoinitiators which have an absorbance spectrum only in the visible light region.

As noted earlier, pigments in inks (particularly black, blue, green and white ones) absorb at the same UV light wavelengths at which UV photoinitiators must absorb in order to start the curing of the ink. As a result, the UV photoinitiators in the ink beneath the surface of the ink layer will be deprived of adequate UV light by the pigments and curing of the ink will be limited to the upper ink layer. In other words, the UV photoinitiators and pigments compete for the same UV light.

By adding to an ink, with or without UV photoinitiators, a visible light photoinitiator which absorbs radiation having longer wavelengths than that absorbed by the pigments and UV photoinitiators, the speed and completeness of the through-cure of the ink will be increased. Also the amount of energy needed for through-cure can be reduced. Since the light source used for curing can be selected to emit light not only in the UV region of the spectrum (which is absorbed by the pigments), but also visible light at certain wavelengths, a visible light photoinitiator added to the ink can absorb such visible light, that is typically wasted during the curing of the ink and therefore more effectively initiate the curing of the ink. In other words, inclusion of a visible light photoinitiator will allow the ink to make use of light from a UV/visual light source which is not being absorbed by the pigments, thereby promoting the through-cure of the ink and more efficiently using the energy emitted by the light source.

Preferably, the visible light photoinitiator should have a substantial part of its absorbance spectrum (i.e., greater than about 50%) at wavelengths greater than about 400 nm. More preferably, the visible photoinitiator should have a maximum absorbance at a wavelength greater than about 400 nm. Also, the amounts of visible light photoinitiators that can be included in the ink range from about 0.01 to 3 parts per 100 parts ink.

Theoretically, upon exposure to UV and/or visible light it is conceivably possible to cure (i.e., polymerize) a polymerizable ink without a photoinitiator. In practice, however, a photoinitiator is required to achieve an economically feasible cure rate (i.e., increased cure rate). Increased cure rates yield higher production rates and lower per unit production costs

Examples of ultraviolet light photoinitiators compatible with the ink base of the present invention (e.g., ink base for production ink or ink base for logo ink) include free radical photoinitiators. (See Jean-Pierre Fouassier, Photoinitiators and Photosensitizers of Polymerization: A Short Review, Vol. 6, European Coatings Journal, pp. 412-419 (1996). Specific examples of free radical photoinitiators include, but are not limited to, oligo(2-hydroxy-2-methyl-1-(4-(1-methylvinyl)phenyl)propanone), 2-hydroxy-2-methyl-1-phenyl-1-propanone, 2,4,6-trimethylbenzophenone, 4-methylbenzophenone, 2,2-dimethoxy-1,2-diphenylethanone, 2-butoxy-1,2-diphenylethanone, 2-(2-methyl propaxy)-1,2-diphenylethanone, benzophenone, 2-alpha hydroxy ketone, other alpha hydroxy ketones, other benzophenone derivatives or mixtures thereof. Other photoinitiators (i.e., photopolymerization initiators) compatible and suitable for use with the inks of the present invention are well known in the art. Additional examples of suitable photoinitiators are listed in U.S. Pat. No. 4,670,295 (Quinn et al.) and U.S. Pat. No. 4,680,368 (Nakamoto et al.).

A preferred photoinitiator is Esacure.TM. KIP-100F that is commercially available from Sartomer. This photoinitiator (Esacure.TM. KIP-100F) is a liquid mixture of 70% by weight of oligo(2-hydroxy-2-methyl-1-(4-(1-methylvinyl)phenyl)propanone) with a M.W.=204.7 grams/mole per repeating unit and 30% by weight of 2-hydroxy-2-methyl-1-phenyl-1-propanone with a M.W.=164.2 grams/mole. This commercially available photoinitiator is a highly reactive, non-yellowing initiator for the polymerization of radiation curable inks. It is further characterized by the following physical properties:
Appearance Clear, slightly yellow viscous liquid
Odor Faint, characteristic
Solubility: Insoluble in water, soluble in most common organic solvents, monomers, prepolymers. Compatible with resins.
Boiling Point >200° C.
Flash Point 110° C. (Closed cup-Pensky-Martens)
Density 1.1 g/cm³ at 20° C.
Viscosity 15-30 Pa.s. (Brookfield 20 rpm 20° C.)
CAS No. 7473-98-5

In accordance with the present invention, the photoinitiator(s) may be added to the ink base in an amount sufficient to increase the cure rate of a radiation curable ink. However, photoinitiators are typically extremely expensive. Therefore, it is preferable to use a minimum amount of photoinitiator without unduly sacrificing cure rates, production rates or production costs. For example, the photoinitiator is present from about 0.05% to about 15% by weight of the total weight of the ink. However, it is preferred to use from about 0.05% to about 5% of the photoinitiator, more preferably, from about 0.1% to about 0.5% by weight. For example, 0.1% of Esacure.TM. KIP-100F is sufficient to formulate a radiation curable production ink.

Other suitable commercially available photoinitiators include, but are not limited to, 1-hydroxy cyclohexyl phenyl ketone (Irgaeure.TM. 184); n⁵ -2,4-cydopentadien-1-yl) ((1,2,3,4,5,6-n)-(1-methyl ethyl)benzene)-iron (+)-hexafluorophosphate (-1) (Irgacure.TM. 261); 2-benzyl-2-n-dimethylamino-1-(4-morpholinophenyl)-1-butanone (lrgacure.TM. 369); 1-hydroxycyclohexyl phenyl ketone (50% by weight) plus benzophenone (50% by weight) (lrgacure.TM. 500); bis(2,6-dimethoxy benzoyl)-2,4,4 trimethylpentyl phosphineoxide (DMBAPO) (25% by weight) plus 2-hydroxy-2-methyl-1-phenylpropan-1-one (HMMP) (75% by weight) (Irgacure.TM. 1700); 4-(2-hydroxyethoxy) phenyl-(2-hydroxy propyl)ketone (lrgacure.TM. 2959); 2,4,6-Trimethyl benzoyl diphenyl phosphineoxide (TPO) (50% by weight) plus 2-hydroxy-2-methyl-1-phenyl-propan-1-one (HMPP) (50% by weight) (Darocur.TM. 4265); 2,2-dimethoxy-2-phenylacetophenone (BDK) (lrgacure.TM. 651); bis(n⁵-2,4-cyclopentadien-1-yl), bis (2,6-difluoro-3-(1H-pyrrol-1-yl)phenyl) Titanium (CGI-784); 2-methyl-1-(4-(methytthio)phenyt)-2-morphotino propan-1-one (MMMP) (Irgacure.TM. 907); 2-hydroxy-2-methyl-1-phenyl-propan-1-one (HMPP) (Darocur.TM. 1173); or mixtures thereof. These photoinitiators are commercially available from Ciba-Geigy.

In addition, the ink base preferably includes one or more visible light photoinitiators

Visible light photoinitiators which are particularly suitable for the present invention include fluorene derivatives such as those described in U.S. Pat. No. 5,451,343 to Neckers et al., U.S. Pat. No. 5,395,862 to Neckers et al. and Diefliker, Chemistry & Technology of UV & EB Formulation for Coatings, Inks & Paints, vol. III, pp. 228-299, Selective Industrial Training Assocs. Ltd. (1991)

Preferred fluorene derivatives useful as visible light photoinitiators are 5,7-diiodo-3-butoxy-6-fluorene (with a maximum absorbance at 470 nm); 2,4,5,7-tetraiodo-3-hydroxy-6-fluorene (with a maximum absorbance at 535 nm); and 2,4,5,7-tetraiodo-9-cyano-3-hydroxy-6-fluorene (with a maximum absorbance at 635 nm), all of which are available from Spectra Group Limited, Inc.

The radiation for curing the ink can be produced from a UV and visible light source. If photoinitiators, which only absorb UV or only visible light are used, then the radiation can be produced from a source which only emits UV or visible light, respectively.

UV-curing of an ink is a well known technique, but typically based on a thermosetting polymer as film forming agent. However, a decorative pattern based on an ink with a thermosetting polymer cannot be covered with a second thermoplastic film. A lack of adhesion between the thermosetting binder of the ink and the thermoplastic film, causes delamination between the pattern and the protective thermoplastic film, if thermal welding is used.

The protective film can be adhered to the printed base film by welding or coextrusion, gluing.

Preferably the protective film is adhered to the base film by thermal welding Gluing the printed base film and the protective film together has not only the disadvantage of an additional process step of applying an adhesive, but also that adhesives tend to degrade and change colour when applied in outdoor usage, certainly if the applied protective film is fully transparent.

### Comparative example A

A rigid PVC base film (supplier Ineos) was printed with a marble pattern with an UV curing ink (Supplier Sun Chemical) and provided with a PMMA top layer (Supplier Kaneka).

The film was printed with the UV ink on a standard rotogravure installation. In order to dry the ink a UV lamp was used. After drying a PMMA top layer was applied using thermal lamination technology. There was no permanent adhesion between the top layer and the printed foil. When the top layer was taken off, no transfer to this layer of the ink was observed. All the ink stayed completely onto the base film.

## Claims

1. Method for producing a multilayer decorative film by printing an ink on a first surface of a thermoplastic base film after which a protective thermoplastic film is adhered to the first surface of the base film, **characterized in that** the ink comprises a monofunctional compound that after printing is polymerised by radiation to a thermoplastic film forming agent.

2. Method according to claim 1, wherein the ink further comprises a photo initiator.

3. Method according to claim 1 or 2, wherein the monofunctional compound is an acrylate

## Patentansprüche

1. Verfahren zur Herstellung einer mehrschichtigen dekorativen Folie durch den Druck einer Tinte auf eine erste Fläche einer thermoplastischen Basisfolie, wonach eine thermoplastische Schutzfolie auf die erste Fläche der Basisfolie geklebt wird, **dadurch gekennzeichnet, dass** die Tinte eine monofunktionale Verbindung umfasst, die nach dem Druck durch Strahlung auf ein thermoplastisches Folienbildungsmittel polymerisiert wird.

2. Verfahren nach Anspruch 1, wobei die Tinte weiter einen Fotoinitiator umfasst.

3. Verfahren nach Anspruch 1 oder 2, wobei die monofunktionale Verbindung ein Akrylat ist.

## Revendications

1. Procédé pour produire un film décoratif multicouche en imprimant une encre sur une première surface d'un film de base thermoplastique après quoi un film thermoplastique de protection est collé à la première surface du film de base, **caractérisé en ce que** l'encre comprend un composé monofonctionnel qui, après l'impression, est polymérisé par rayonnement en un agent de formation de film thermoplastique.

2. Procédé selon la revendication 1, dans lequel l'encre comprend en outre un photo-initiateur.

3. Procédé selon la revendication 1 ou 2, dans lequel le composé monofonctionnel est un acrylate.
